(19) Europäisches Patentamt / European Patent Office / Office européen des brevets

(11) **EP 2 579 442 B1**

(12) **FASCICULE DE BREVET EUROPEEN**

(45) Date de publication et mention
de la délivrance du brevet:
**30.08.2017 Bulletin 2017/35**

(51) Int Cl.:
**H02M 7/487** *(2007.01)*

(21) Numéro de dépôt: **12187339.2**

(22) Date de dépôt: **05.10.2012**

(54) **Système de conversion d'un courant continu en un courant alternatif comportant un organe de correction de la tension délivrée comprenant un organe de mesure d'une composante basse fréquence de ladite tension, et procédé de commande d'un tel système**

Umwandlungssystem eines Gleichstroms in einen Wechselstrom, das über eine Korrekturorgan der angelegten Spannung verfügt, das wiederum über ein Messorgan einer Niedrigfrequenzkomponente dieser Spannung verfügt, und Steuerverfahren eines solchen Systems

System for converting direct current into alternating current comprising a means for correcting the voltage supplied comprising means for measuring a low-frequency component of said voltage, and method for controlling such a system

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.10.2011 FR 1159022**

(43) Date de publication de la demande:
**10.04.2013 Bulletin 2013/15**

(73) Titulaire: **GE Energy Power Conversion Technology Ltd**
**Rugby**
**Warwickshire CV21 1BU (GB)**

(72) Inventeur: **Lapassat, Nicolas**
**91140 Villebon-sur-Yvette (FR)**

(74) Mandataire: **Serjeants LLP**
**Dock**
**75 Exploration Drive**
**Leicester, LE4 5NU (GB)**

(56) Documents cités:
**EP-A2- 0 220 638       US-A- 5 177 428**
**US-A1- 2009 161 392    US-A1- 2010 084 922**

• **PINHEIRO H ET AL: "A digital controller for single-phase UPS inverters to reduce the output dc component", POWER ELECTRONICS SPECIALISTS CONFERENCE, 2004. PESC 04. 2004 IEEE 35TH ANNUAL, AACHEN, GERMANY 20-25 JUNE 2004, PISCATAWAY, NJ, USA,IEEE, US, 20 juin 2004 (2004-06-20), pages 1311-1314, XP010739684, DOI: 10.1109/PESC.2004.1355612 ISBN: 978-0-7803-8399-9**

EP 2 579 442 B1

## Description

La présente invention concerne un système de conversion d'un courant continu d'entrée en un courant alternatif de sortie comportant M phase(s), M étant un nombre entier supérieur ou égal à un, du type comprenant :

- au moins un onduleur de tension propre à convertir un courant continu d'entrée en un courant alternatif de sortie, le ou chaque onduleur comprenant deux bornes d'entrée, M borne(s) de sortie et M branche(s) de commutation , chaque borne de sortie correspondant à une phase,
- des moyens de commande du ou de chaque onduleur,
- au moins un dispositif de correction de la tension de sortie délivrée par le ou chaque onduleur, propre à injecter un signal correctif en entrée des moyens de commande.

L'invention concerne également un procédé de commande d'un tel système de conversion.

On connaît du document US 5,177,428 un système de conversion du type précité. Un tel système comporte un onduleur triphasé, et est généralement utilisé afin de réguler la puissance réactive d'une charge connectée à un réseau alternatif triphasé. Le système de conversion est relié à la charge via un transformateur de tension triphasé. L'organe de correction de la tension délivrée par l'onduleur comporte un organe de mesure de la composante continue du courant délivré par au moins deux des trois sorties de phases de l'onduleur.

Un tel système permet de réduire la composante continue de chacune des trois phases du courant délivré par l'onduleur par réinjection d'un signal correctif de tension en entrée des moyens de commande de l'onduleur. Un tel système permet ainsi de réduire le phénomène de magnétisation au sein du transformateur triphasé, ce phénomène de magnétisation pouvant entrainer la saturation du transformateur du fait de la circulation de courants continus au sein de celui-ci.

Toutefois, lorsque des charges perturbatrices telles que des fours à arc, sont reliées au réseau alternatif, des fluctuations rapides du courant apparaissent sur le réseau. Ces fluctuations génèrent des harmoniques de fréquence diffuses autour de la fréquence principale du courant alternatif délivré par l'onduleur, ainsi qu'une composante continue dans le courant alternatif délivré. La valeur de cette composante se situant en deçà du niveau de précision des capteurs de courant utilisés dans le système de conversion décrit dans le document US 5,177,428, ce dernier ne permet alors plus de réduire la composante continue du courant délivré par l'onduleur.

Par ailleurs, dans un tel système, le signal correctif réinjecté en entrée des moyens de commande est notamment élaboré au moyen d'un signal de référence quasi-sinusoïdal calé sur la fréquence principale du courant alternatif délivré par l'onduleur. Or, dans le cas où des charges perturbatrices sont reliées au réseau alternatif, le signal de référence est fortement bruité et la réinjection de signaux en entrée des moyens de commande ne permet plus de réduire la composante continue du courant alternatif délivré. L'article "A Digital Controller for Single-Phase UPS Inverters to Reduce the Output DC Component" publié dans IEEE PESC 2004 (XP10739684) décrit un système de conversion d'un courant continu d'entrée en un courant alternatif de sortie monophasé, comprenant un onduleur de tension monophasée, un organe de commande numérique de l'onduleur et un dispositif de correction de la tension de sortie délivrée par l'onduleur. L'onduleur de tension comprend deux bornes d'entrée, deux bornes de sortie et deux branches de commutation. Ce document ne décrit toutefois pas que l'onduleur de tension comprend deux sources de tension continue connectées entre ses deux bornes d'entrée, les deux sources de tension étant reliées entre elles par un point milieu. Il ne décrit pas non plus que le dispositif de correction est connecté entre au moins une borne de sortie de l'onduleur et le point milieu de l'onduleur. Le but de l'invention est de proposer un système de conversion d'un courant continu d'entrée en un courant alternatif de sortie permettant de réduire les composantes continues ou basse fréquence homopolaires de la ou des phases du courant alternatif de sortie, lorsque des charges perturbatrices sont reliées au réseau alternatif.

A cet effet, l'invention a pour objet un système de conversion du type précité, caractérisé en ce que le ou chaque dispositif de correction comporte un organe de mesure d'une composante de la tension délivrée par le ou chaque onduleur pour les fréquences inférieures à 10 Hz, de préférence inférieures ou égales à 1 Hz, et un organe de calcul du signal correctif en fonction de la composante de tension mesurée. Le ou chaque onduleur de tension comporte deux sources de tension continue connectées en série entre ses deux bornes d'entrée, les deux sources étant reliées entre elles par un point milieu, et le ou chaque dispositif de correction est connecté entre au moins une borne de sortie du ou d'un des onduleur(s) et le point milieu dudit onduleur.

Suivant d'autres modes de réalisation, le système de conversion comprend une ou plusieurs des caractéristiques suivantes, prises isolément ou suivant toutes les combinaisons techniquement possibles :

- le système de conversion comporte un transformateur de tension à M phase(s), comprenant M borne(s) d'entrée et M borne(s) de sortie, chaque borne d'entrée correspondant à une phase et étant reliée à une sortie du ou de chaque onduleur correspondant à ladite phase ;

- l'organe de mesure comporte un étage d'adaptation de tension propre à réduire la valeur de la tension de sortie délivrée, un étage de filtrage propre à extraire une composante de tension de fréquence inférieure à 10 Hz, de préférence inférieure ou égale à 1 Hz, et un étage de régulation de la tension, les étages d'adaptation de tension, de filtrage et de régulation étant connectés entre eux ;

- les étages d'adaptation de tension, de filtrage et de régulation sont connectés en série et dans cet ordre ;
- l'étage de filtrage comporte un filtre de type passe-bas présentant une fréquence de coupure de valeur inférieure à la fréquence principale du courant alternatif délivré en sortie du ou de chaque onduleur ;
- l'étage de régulation comporte un élément propre à assurer une correction de type intégrale.

L'invention a également pour objet un procédé de commande d'un système de conversion d'un courant continu d'entrée en un courant alternatif de sortie comportant M phase(s), M étant un nombre entier supérieur ou égal à un, le système de conversion comprenant au moins un onduleur de tension propre à convertir un courant continu d'entrée en un courant alternatif de sortie, le ou chaque onduleur comprenant deux bornes d'entrée, deux sources de tension continue connectées en série entre ses deux bornes d'entrée, M borne(s) de sortie et M branche(s) de commutation, les deux sources de tension continue étant reliées entre elles par un point milieu, chaque borne de sortie correspondant à une phase, des moyens de commande du ou de chaque onduleur, au moins un dispositif de correction de la tension de sortie délivrée par le ou chaque onduleur, le procédé comportant une étape de réinjection d'un signal correctif issu du ou de chaque dispositif de correction en entrée des moyens de commande du ou de chaque onduleur, le procédé étant caractérisé en ce qu'il comporte, préalablement à l'étape de réinjection :

- une étape de mesure, par le ou chaque dispositif de correction, d'une composante de la tension de sortie délivrée par le ou chaque onduleur pour les fréquences inférieures à 10 Hz, de préférence inférieures ou égales à 1 Hz, et
- une étape de calcul, par le ou chaque dispositif de correction, du signal correctif en fonction de la composante de tension mesurée.

Suivant un autre mode de réalisation, le procédé de commande comprend la caractéristique suivante :

- l'étape de mesure de la composante de la tension comporte les sous-étapes suivantes :

  - la réduction de la valeur de l'amplitude de la tension alternative de sortie délivrée par le ou chaque onduleur, et
  - le filtrage d'une composante de tension de fréquence inférieure à 10 Hz, de préférence inférieure ou égale à 1 Hz.

Ces caractéristiques et avantages de l'invention apparaîtront à la lecture de la description qui va suivre, donnée uniquement à titre d'exemple, et faite en référence aux dessins annexés, sur lesquels :

- la figure 1 est une vue schématique d'un système de conversion selon l'invention, comportant un onduleur de tension triphasé, un dispositif de correction de la tension de sortie délivrée par l'onduleur triphasé et un transformateur de tension, le système étant relié via le transformateur à un réseau alternatif, auquel est également connecté un four à arc,
- la figure 2 est un schéma électrique du système de conversion de la figure 1 selon un premier mode de réalisation, comportant trois organes de correction de la tension pour chaque phase de la tension triphasée délivrée par l'onduleur,
- la figure 3 est un schéma électrique de l'organe de correction de la figure 2,
- la figure 4 est un schéma électrique d'un système de conversion selon un deuxième mode de réalisation de l'invention, comportant deux onduleurs et trois organes de correction de la tension pour chaque phase de la tension triphasée délivrée par chaque onduleur,
- la figure 5 est un schéma électrique de l'organe de correction de la figure 4,
- la figure 6 est un schéma électrique d'un système de conversion selon un troisième mode de réalisation de l'invention, comportant un onduleur et un organe de correction de la tension pour chaque tension entre phases de la tension triphasée délivrée par l'onduleur,
- la figure 7 est un schéma électrique de l'organe de correction de la figure 6, et
- la figure 8 est un schéma électrique d'un système de conversion selon un quatrième mode de réalisation de l'invention, comportant deux onduleurs et un organe de correction de la tension pour chaque tension entre phases de la tension triphasée délivrée par chaque l'onduleur.

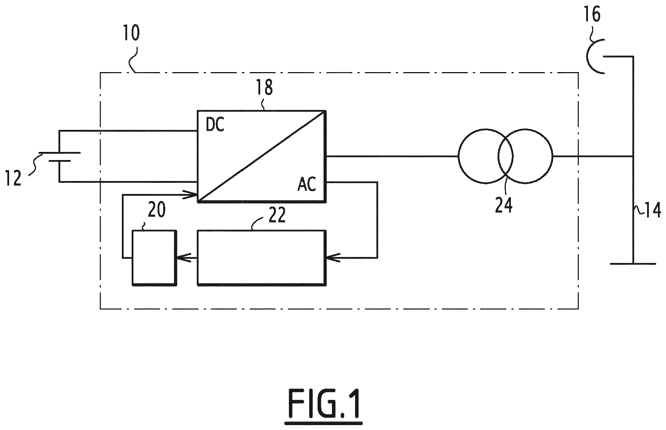

La figure 1 représente un système de conversion 10 d'un courant continu d'entrée en un courant alternatif polyphasé de sortie. Le système de conversion 10 est relié d'une part à une source 12 de courant continu ou redressé et à un bus 13 de tension continue. Il est relié d'autre part à un réseau électrique 14. Le bus 13 de tension continue fournit une tension de valeur par exemple égale à 15 kV. Le réseau électrique 14 est, par exemple, un réseau alternatif triphasé de tension élevée, typiquement de l'ordre de 33000 V. Un four à arc 16 est également relié au réseau électrique 14.

Le système de conversion 10 de courant comprend un onduleur de tension 18, propre à convertir un courant continu d'entrée en un courant alternatif polyphasé de sortie. Cet onduleur est relié à la source 12 de courant.

Le système de conversion 10 comporte également des moyens 20 de commande de l'onduleur 18, et un dispositif 22 de correction de la tension de sortie délivrée par l'onduleur 18.

Le système de conversion 10 comporte également un transformateur de tension 24, connecté en sortie de l'onduleur 18. La sortie du transformateur 24 est reliée au réseau électrique 14.

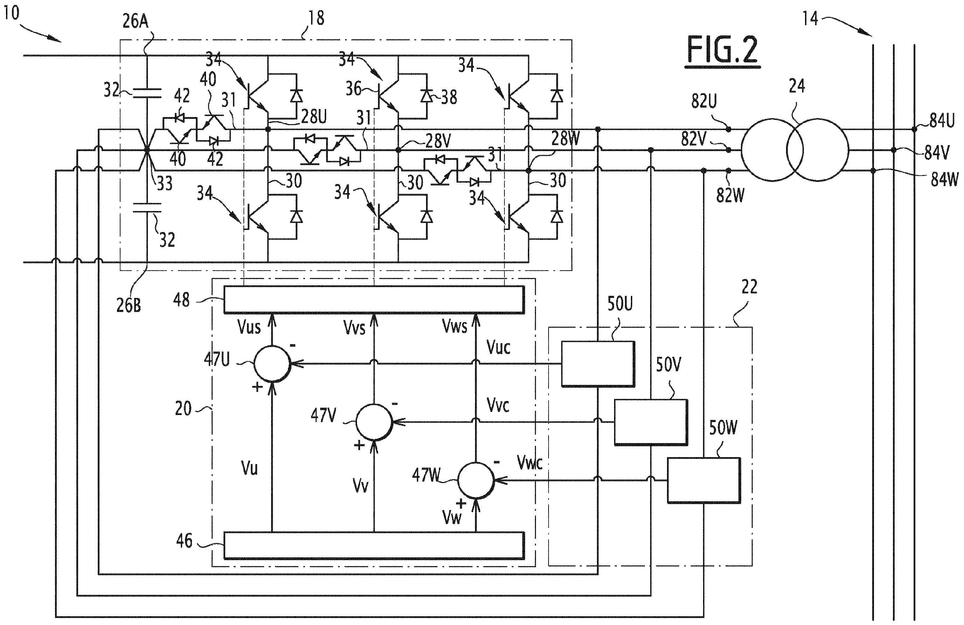

L'onduleur de tension comporte une borne positive d'entrée, une borne négative d'entrée, et M bornes de sortie. Chaque borne de sortie correspond à une phase respective du courant alternatif polyphasé de sortie propre à être délivré par l'onduleur. Le courant de sortie comporte une pluralité M de phases, M étant un nombre entier supérieur ou égal à un. Dans l'exemple de réalisation de la figure 2, le nombre M de phases est égal à trois et l'onduleur de tension 18 est un onduleur triphasé trois niveaux clampé par le neutre. L'onduleur triphasé 18 comprend une borne positive d'entrée 26A, une borne négative d'entrée 26B et trois bornes de sortie 28U, 28V, 28W. L'onduleur 18 comprend en outre, pour chaque borne de sortie 28U, 28V, 28W correspondant à une phase respective U, V, W, une branche de commutation 30 reliée entre les deux bornes d'entrée 26A, 26B et une branche de clampage 31 reliant le neutre à un point milieu de la branche de commutation associée. L'onduleur triphasé 18 comprend également deux condensateurs 32 connectés en série entre les deux bornes d'entrée 26A, 26B, et reliés entre eux en un point milieu 33 formant le neutre.

En variante, chaque condensateur 32 est remplacé par une source de tension continue.

Chaque branche de commutation 30 comprend deux interrupteurs électriques commandables 34 connectés en série et dans le même sens, et reliés entre eux par un point milieu, chaque point milieu formant une borne de sortie 28U, 28V, 28W.

Comme connu en soi, chaque interrupteur électrique 34 est un interrupteur bidirectionnel en courant et unidirectionnel en tension. Chaque interrupteur électrique 34 comprend un transistor 36 et une diode 38 connectée en antiparallèle assurant ainsi des trajets de circulation bidirectionnelle de courant lorsque le transistor 36 est passant.

Tous les interrupteurs électriques 34 sont, par exemple, identiques. Le transistor 36 est, par exemple, un transistor bipolaire à grille isolée, également appelé transistor IGBT (de l'anglais Insulated Gate Bipolar Transistor). La grille de chaque transistor 36 est reliée aux moyens de commande 20 pour recevoir un signal de commande correspondant.

Chaque branche de clampage 31 est connectée entre le point milieu 33 et une borne de sortie 28U, 28V, 28W. Chaque branche de clampage 31 comporte deux transistors 40 connectés tête-bêche et en série. Elle comporte également deux diodes 42, chacune étant connectée en antiparallèle d'un transistor 40 respectif, assurant ainsi des trajets de circulation bidirectionnelle de courant lorsque le transistor 40 correspondant est passant.

Les transistors 40 sont, par exemple, des transistors IGBT.

Les moyens de commande 20 comprennent un générateur 46 de tensions de référence, trois soustracteurs 47U, 47V, 47W, et une unité de traitement d'informations 48. Les moyens de commande 20 sont reliés à chacun des interrupteurs électriques 34, comme indiqué précédemment, et sont propres à envoyer des signaux de commande auxdits interrupteurs 34.

Comme connu en soi, le générateur 46 de tensions de référence génère des tensions Vu, Vv, Vw, chaque tension correspondant à une phase respective U, V, W, et permettant la régulation du courant alternatif fourni par l'onduleur 18 sur la phase correspondante. Chaque signal de tension Vu, Vv, Vw est, par exemple, un signal sinusoïdal.

Chaque soustracteur 47U, 47V, 47W correspond à une phase respective U, V, W, et est connecté entre le générateur 46 de tensions de référence et l'unité de traitement d'informations 48. Le soustracteur 47U, 47V, respectivement 47W reçoit en entrée le signal de tension sinusoïdale Vu, Vv, respectivement Vw ainsi qu'un signal propre à la phase correspondante issu du dispositif de correction 22, et fournit en sortie un signal de tension sinusoïdale Vus, Vvs, respectivement Vws.

Comme connu en soi, l'unité de traitement d'informations 48 est formée, par exemple, d'un processeur de données associé à une mémoire. La mémoire est apte à stocker un logiciel de sélection d'une borne de sortie 28 à connecter successivement à la borne positive 26A, puis à la borne négative 26B, puis au point milieu 33. La mémoire est également apte à stocker un logiciel de calcul des signaux de commande en fonction de la borne de sortie sélectionnée, et un logiciel d'application des signaux de commande aux interrupteurs 34.

Le processeur de données est propre à calculer les signaux de commande envoyés aux interrupteurs 34. Ce calcul est effectué par la mise en oeuvre par le processeur du logiciel de calcul selon, par exemple, un procédé de modulation par largeur d'impulsion avec entrelacement des impulsions et déphasage entre les signaux de commande. En pratique, lors d'une étape de ce calcul consistant, pour chaque phase, à comparer une onde sinusoïdale génératrice à un signal triangulaire, les tensions sinusoïdales Vus, Vvs et Vws sont utilisées comme ondes génératrices.

Le dispositif de correction 22 est disposé entre la sortie de l'onduleur 18 et le point milieu 33. Le dispositif de correction 22 comprend trois organes de correction 50U, 50V, 50W.

L'organe de correction 50U, 50V, respectivement 50W est connecté entre, d'une part, une borne de sortie 28U, 28V, respectivement 28W et, d'autre part, le point milieu 33. L'organe de correction 50U, 50V, respectivement 50W est propre à injecter un signal correctif Vuc, Vvc, respectivement Vcc en entrée des moyens de commande 20 de l'onduleur 18.

En variante, l'organe de correction 50U, 50V, respectivement 50W est connecté entre, d'une part, une borne de sortie 28U, 28V, respectivement 28W et, d'autre part, le neutre du transformateur 24.

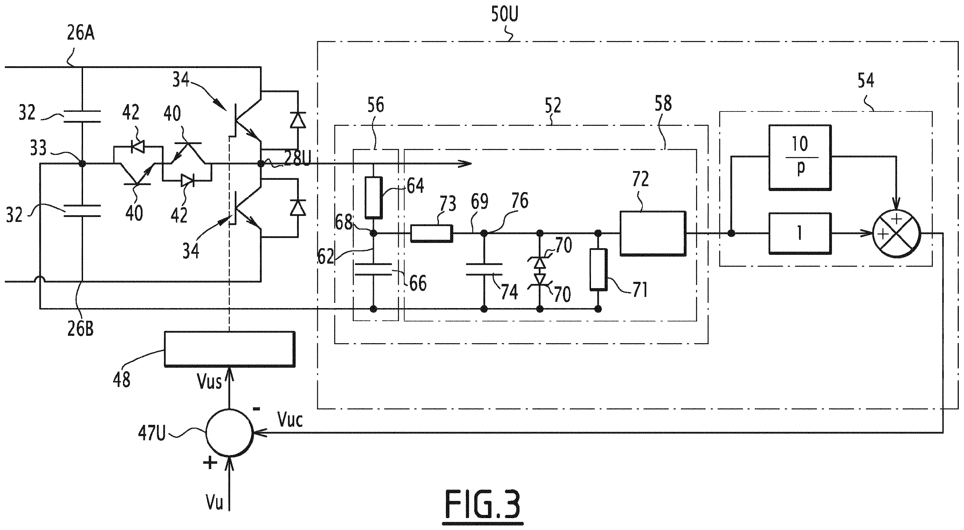

Dans l'exemple de réalisation de la figure 3, l'organe de correction 50U comporte un organe de mesure 52 d'une composante de la tension délivrée par l'onduleur 18, et un organe de calcul 54 du signal correctif Vuc.

L'organe de mesure 52 comporte un étage 56 d'adaptation de tension et un étage 58 de filtrage, et est propre à mesurer une composante de la tension délivrée par l'onduleur 18 sur la phase U pour les fréquences inférieures à une fréquence-seuil $f_s$. La valeur de la fréquence-seuil $f_s$ est, par exemple, donnée par la relation :

$$f_s = \frac{f}{50}$$, où $f$ est la fréquence principale du courant délivré par l'onduleur 18. Dans l'exemple de réalisation de la figure 3 l'onduleur 18 délivre un courant de fréquence principale égale à 50Hz. La fréquence-seuil $f_s$ vaut alors 1 Hz.

En variante, la valeur de la fréquence-seuil $f_s$ est donnée par la relation : $f_s = \frac{f}{5}$, et vaut 10 Hz si l'onduleur 18 délivre un courant de fréquence principale égale à 50 Hz.

L'étage 56 d'adaptation de tension comporte une branche 62 et est propre à réduire la valeur de l'amplitude de la tension alternative de sortie mesurée sur la borne de sortie 28U.

La branche 62 est connectée entre la borne de sortie 28U et le point milieu 33, et comporte une résistance 64 et un condensateur 66, connectés en série et reliés entre eux par un point milieu 68. La résistance 64 présente, par exemple, une valeur égale à 200 k$\Omega$. Le condensateur 66 présente, par exemple, une valeur égale à 1$\mu$F.

L'étage 58 de filtrage comporte une branche 69, deux diodes Zener 70, une résistance 71 et un filtre passe-bas 72. L'étage 58 est propre à extraire une composante de fréquence inférieure à 1 Hz de la tension de sortie mesurée sur la borne de sortie 28U.

La branche 69 est connectée en parallèle du condensateur 66, entre le point milieu 68 et le point milieu 33, et comporte une résistance 73 et un condensateur 74, connectés en série et reliés entre eux par un point milieu 76. La résistance 73 présente, par exemple, une valeur égale à 200 k$\Omega$. Le condensateur 74 présente, par exemple, une valeur égale à 1$\mu$F.

Les deux diodes Zener 70, connectées tête-bêche et en série, ainsi que la résistance 71, sont connectées en parallèle du condensateur 74. La résistance 71 présente, par exemple, une valeur égale à 47 k$\Omega$.

En variante, l'étage 58 de filtrage ne comporte pas de résistance 71.

En variante, l'étage 58 de filtrage ne comporte pas de branche 69 comprenant la résistance 73 et le condensateur 74. Selon cette variante, les deux diodes Zener 70 sont connectées en parallèle du condensateur 66.

L'entrée du filtre passe-bas 72 est connectée au point milieu 76. Le filtre passe-bas 72 présente une fréquence de coupure de valeur inférieure à la fréquence principale du courant alternatif délivré par l'onduleur 18 sur la borne de sortie 28U. Le filtre passe-bas 72 est, par exemple, un filtre de type « Butterworth », d'ordre deux, de fréquence de coupure par exemple égale à 8 Hz.

En variante, le filtre passe-bas 72 est un filtre de type « Chebychev », d'ordre supérieur ou égal à un, de préférence d'ordre supérieur ou égal à deux, de préférence d'ordre trois.

En variante, le filtre passe-bas 72 est constitué de tout filtre à forte coupure, générant peu de déphasage en basse fréquence.

L'organe de calcul 54 est connecté entre la sortie du filtre passe-bas 72 et l'entrée des moyens de commande 20. L'organe de calcul 54 comporte un étage de régulation, formé par exemple d'un correcteur proportionnel-intégral. Comme connu en soi, le correcteur proportionnel intégral 54 est formé, par exemple, d'une association entre un montage à amplificateur opérationnel de type « proportionnel » et un montage à amplificateur opérationnel de type « intégrateur ». Le correcteur proportionnel-intégral 54 présente un gain de valeur, par exemple, égale à 10.

L'organe de calcul 54 est propre à fournir le signal correctif Vuc au soustracteur 47U.

En variante, l'étage de régulation 54 est formé de tout élément propre à assurer une correction de type intégrale.

Les organes de correction 50V et 50W, non représentés sur la figure 3, ont chacun une structure analogue à celle de l'organe de correction 50U. L'organe de correction 50V, respectivement 50W, est propre à fournir le signal correctif Vvc, respectivement Vwc au soustracteur 47V, respectivement 47W.

Le transformateur de tension 24 comporte M bornes d'entrée 82 et M bornes de sortie 84. Le transformateur de tension 24 est propre à transformer le courant alternatif de basse tension fourni par l'onduleur 18 en un courant alternatif de tension supérieure, correspondant à la tension du réseau électrique 14. Plus précisément, le transformateur de tension 24 est propre à fournir au réseau électrique 14 un courant présentant une haute tension de valeur, par exemple, égale à 33 kV à partir de la basse tension fournie par l'onduleur 18 de valeur, par exemple, égale à 8 kV. Dans l'exemple de réalisation de la figure 2, le nombre M de phases est égal à trois et le transformateur de tension 24 comporte trois bornes d'entrée 82U, 82V, 82W et trois bornes de sortie 84U, 84V, 84W.

Chaque borne d'entrée 82U, 82V, 82W correspond à une phase respective U, V, W, et est connectée à une borne de sortie respective 28U, 28V, 28W.

Chaque borne de sortie 84U, 84V, 84W est connectée à une phase respective U, V, W du réseau électrique alternatif triphasé 14.

En variante, le système de conversion 10 ne comporte pas de transformateur de tension 24, l'onduleur 18 fournissant directement sur ses bornes de sortie un courant présentant une haute tension de valeur compatible avec le réseau électrique 14. La valeur de cette haute tension est, par exemple, égale à 33 kV.

En variante, le système de conversion 10 comporte une pluralité N d'onduleurs 18, N étant un entier supérieur ou égal à deux. Les onduleurs 18 sont connectés entre eux au travers d'inductances de couplage, telles que décrites dans le document FR 0 859 062. Chaque onduleur 18 délivre un courant alternatif polyphasé et est connecté par ses M bornes de sortie 28 aux M bornes d'entrée 82 du transformateur de tension 24. Le dispositif de correction 22 comporte, pour chacune des M phases de chaque onduleur 18, un organe de correction propre à injecter un signal correctif en entrée des moyens de commande 20 dudit onduleur 18. Le dispositif de correction 22 comporte donc M x N organes de correction. Pour un nombre M de phases du courant alternatif par exemple égal à trois, le dispositif de correction 22 comporte alors 3N organes de correction.

Le fonctionnement du système de conversion 10 va désormais être expliqué.

La mise en service du four à arc 16 génère des fluctuations aléatoires et brutales de courant sur le réseau 14. Ces fluctuations de courant se traduisent par l'apparition de composantes continues et/ou basse fréquence au sein du courant alternatif de sortie fourni par l'onduleur 18 sur chacune de ses phases. Consécutivement à la modulation du signal de commande par la porteuse, ces fluctuations de courant se traduisent également par l'apparition de composantes continues et/ou basse fréquence au sein de chaque tension de sortie présente sur les bornes de sortie 28U, 28V, 28W. Si l'onduleur 18 délivre un courant alternatif de sortie de fréquence principale égale à 50 Hz, la fréquence de telles composantes de tension est inférieure à 1 Hz.

Chaque organe de correction 50U, 50V, 50W mesure une tension sur une borne de sortie respective 28U, 28V, 28W et extrait les composantes continues et/ou basse fréquence de la tension mesurée

Plus précisément, cette mesure des composantes continues et/ou basse fréquence de la tension est effectuée via la réduction, par l'étage d'adaptation de tension 56, de la valeur de l'amplitude de la tension alternative de sortie, puis par le filtrage, par l'étage de filtrage 58, des composantes de fréquence inférieure à 1 Hz de la tension de sortie réduite.

Le signal résultant entre ensuite dans l'étage de régulation 54. L'organe de correction 50U, 50V, respectivement 50W fournit alors, par calcul, un signal correctif Vuc, Vvc, respectivement Vwc sur sa sortie. Le signal correctif Vuc, Vvc, respectivement Vwc représente la somme de l'ensemble des composantes de fréquence inférieure à 1 Hz de la tension de sortie mesurée sur la borne de sortie 28U, 28V, respectivement 28W.

Le signal correctif Vuc, Vvc, respectivement Vwc est soustrait du signal de référence Vu, Vv, respectivement Vw par le soustracteur 47U, 47V, respectivement 47W. Le résultat de cette soustraction est injecté en entrée de l'unité de traitement d'informations 48 et permet de compenser, au niveau de la commande de l'onduleur 18, les composantes de fréquence inférieure à 1 Hz de la tension mesurée en sortie de l'onduleur 18.

On conçoit ainsi que le système de conversion 10 selon l'invention permet de réduire la composante continue ou basse fréquence du courant alternatif de sortie fourni par l'onduleur 18 sur chacune de ses trois phases, lorsque des charges perturbatrices sont reliées au réseau alternatif 14.

Par ailleurs le système de conversion 10 selon ce premier mode de réalisation permet de traiter les composantes continues ou basse fréquence homopolaires. Ces composantes homopolaires sont à l'origine d'une circulation de courants continus ou basse fréquence entre les onduleurs si ceux-ci sont reliés entre eux, mais n'entrainent pas la saturation du transformateur 24.

Enfin, le système de conversion 10 selon ce premier mode de réalisation permet, lorsqu'il est utilisé avec plusieurs onduleurs, d'éviter la saturation des inductances de couplage et d'équilibrer les courants circulant entre les onduleurs lorsque ceux ci sont commandés avec une référence unique. Le système de conversion 10 permet ainsi d'obtenir une régulation plus rapide et plus stable du courant alternatif de sortie global.

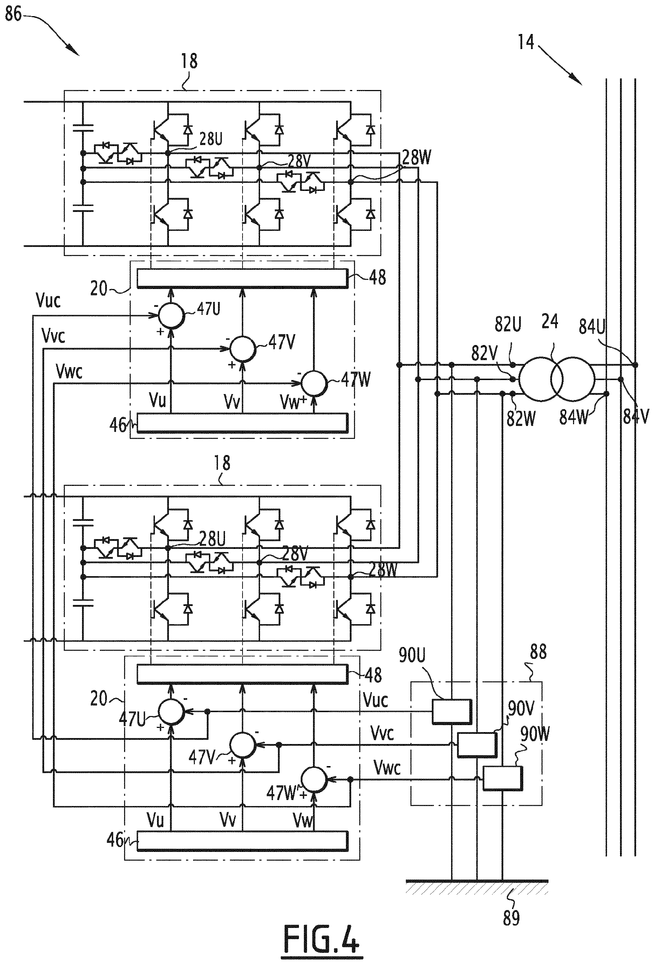

La figure 4 illustre un deuxième mode de réalisation, pour lequel les éléments analogues au premier mode de réalisation décrit précédemment sont repérés par des références identiques.

Selon ce deuxième mode de réalisation, le système de conversion 86 comporte deux onduleurs 18.

Le système de conversion 86 comporte également des moyens de commande 20 propres à chaque onduleur 18, et un dispositif 88 de correction de la tension de sortie délivrée par chaque onduleur 18. Le dispositif de correction 88 est commun aux deux onduleurs 18.

Le système de conversion 86 comporte également un transformateur de tension 24, connecté en sortie de chaque onduleur 18 et relié au réseau électrique 14.

Chaque onduleur 18 est connecté par ses M bornes de sortie 28 aux M bornes d'entrée 82 du transformateur de tension 24. Chaque onduleur 18 est commandé par des moyens de commande 20 qui lui sont propres.

Les moyens de commande 20 de chaque onduleur 18 comprennent un générateur 46 de tensions de référence, trois soustracteurs 47U, 47V, 47W, et une unité de traitement d'informations 48.

Le générateur 46 de tensions de référence génère des tensions Vu, Vv, Vw. La tension de référence Vu est identique pour les deux onduleurs 18. De manière analogue, les tensions de référence Vv, Vw sont identiques pour les deux onduleurs 18.

Le dispositif de correction 88 est disposé à l'entrée du transformateur de tension 24. Il est connecté d'une part aux trois bornes d'entrée 82U, 82V, 82W du transformateur 24 et, d'autre part, au neutre 89 du transformateur 24. Le dispositif de correction 88 comprend M organes de correction 90.

Dans l'exemple de réalisation de la figure 4, le nombre M de phases est égal à trois. Selon cet exemple de réalisation, chaque onduleur 18 comporte donc trois bornes de sortie 28U, 28V, 28W, le transformateur de tension 24 comporte trois bornes d'entrée 82U, 82V, 82W et le dispositif de correction 88 comporte trois organes de correction 90U, 90V, 90W.

L'organe de correction 90U est connecté entre, d'une part, la borne d'entrée 82U du transformateur et, d'autre part, le neutre 89. De manière analogue, l'organe de correction 90V, respectivement 90W est connecté entre, d'une part, la borne d'entrée 82U, respectivement la borne d'entrée 82W et, d'autre part, le neutre 89.

L'organe de correction 90U, 90V, respectivement 90W est propre à injecter un signal correctif Vuc, Vvc, respectivement Vwc en entrée des moyens de commande 20 de chaque onduleur 18. Plus précisément, l'organe de correction 90U, 90V, respectivement 90W est propre à envoyer un signal correctif Vuc, Vvc, respectivement Vwc aux soustracteurs 47U, 47V, respectivement 47W de chaque onduleur 18.

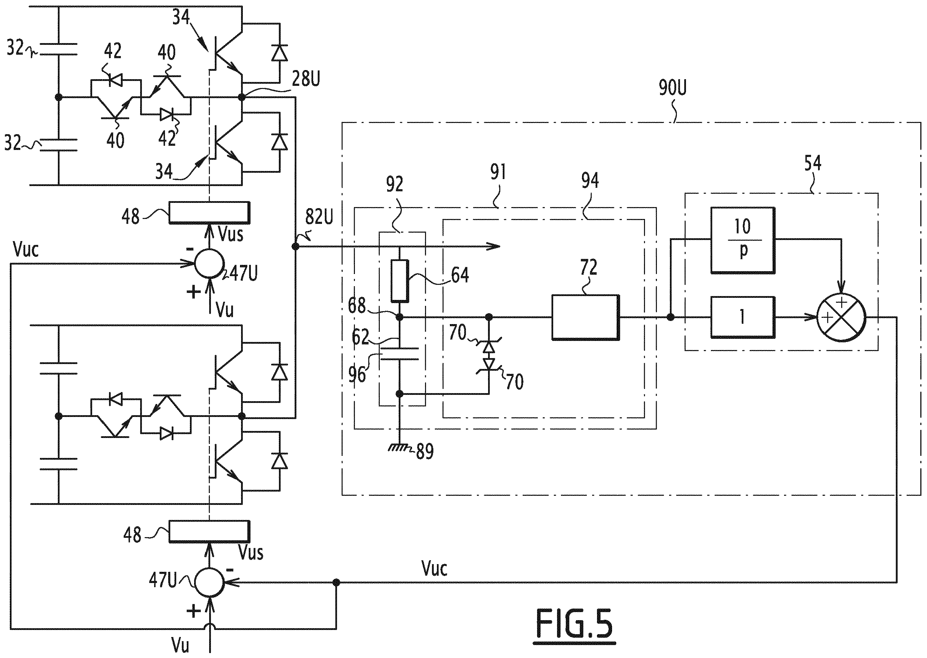

Dans l'exemple de réalisation de la figure 5, l'organe de correction 90U comporte un organe de mesure 91 d'une composante de la tension délivrée par les onduleurs 18, et un organe de calcul 54 du signal correctif Vuc.

L'organe de mesure 91 comporte un étage 92 d'adaptation de tension et un étage 94 de filtrage.

L'étage 92 d'adaptation de tension comporte une branche 62, connectée entre la borne d'entrée 82U du transformateur et le neutre 89. La branche 62 comporte une résistance 64 et un condensateur 96, connectés en série et reliés entre eux par un point milieu 68. Dans cet exemple de réalisation, le bus 13 de tension continue fournit une tension de valeur par exemple égale à 5 kV. La résistance 64 présente, par exemple, une valeur égale à 100 kΩ. Le condensateur 96 présente, par exemple, une valeur égale à 100μF.

L'étage 94 de filtrage comporte deux diodes Zener 70 et un filtre passe-bas 72.

Les deux diodes Zener 70, connectées tête-bêche et en série, sont connectées en parallèle du condensateur 96, entre le point milieu 68 et le neutre 89.

L'entrée du filtre passe-bas 72 est connectée au point milieu 68.

En variante, le système de conversion 86 comporte une pluralité N d'onduleurs 18, N étant un entier supérieur à deux.

Le fonctionnement de ce deuxième mode de réalisation est analogue à celui du premier mode de réalisation décrit précédemment, et n'est donc pas décrit à nouveau.

Le dispositif de correction ne comportant que M organes de correction, les coûts de fabrication du système de conversion sont moindres par rapport aux coûts de fabrication du système de conversion selon le premier mode de réalisation décrit précédemment, pour lequel M organes seraient mis en oeuvre pour chaque onduleur. Par ailleurs, le système de conversion selon ce mode de réalisation permet d'obtenir une meilleure résolution sur la compensation de la composante continue ou basse fréquence du courant alternatif de sortie.

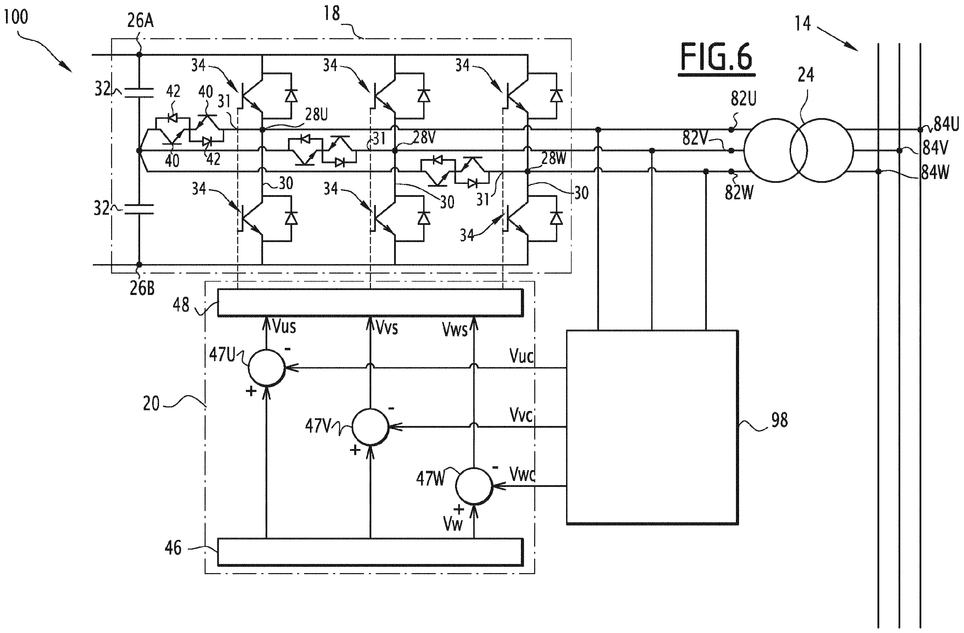

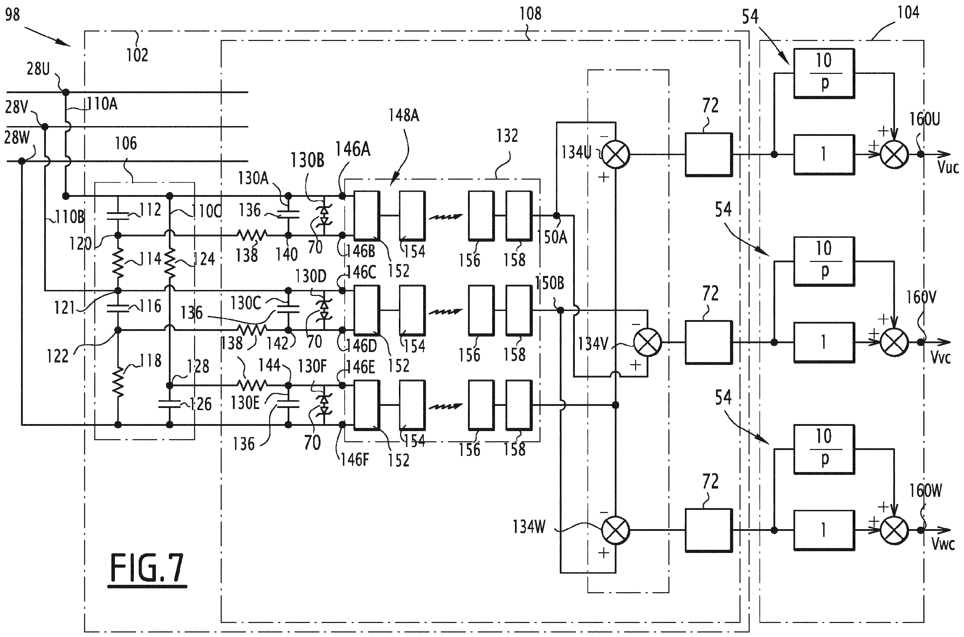

Le dispositif de correction 98 d'un troisième système de conversion 100 selon l'invention est représenté sur les figures 6 et 7.

A la différence du dispositif de correction 22 du système de conversion 10, le dispositif de correction 98 ne comporte qu'un seul organe de correction.

Dans cet exemple de réalisation, le bus 13 de tension continue fournit une tension de valeur par exemple égale à 15 kV.

L'organe de correction 98 est connecté entre les trois bornes de sortie 28U, 28V, 28W de l'onduleur 18, et est propre à injecter trois signaux correctifs Vuc, Vvc, Vwc en entrée des moyens de commande 20 de l'onduleur 18. Plus précisément, l'organe de correction 98 est propre à envoyer le signal correctif Vuc, Vvc, respectivement Vwc au soustracteur 47U, 47V, respectivement 47W de l'onduleur 18.

Dans l'exemple de réalisation de la figure 7, l'organe de correction 98 comporte un organe de mesure 102 d'une composante de la tension délivrée par l'onduleur 18, et un organe de calcul 104 des signaux correctifs Vuc, Vvc, Vwc.

L'organe de mesure 102 comporte un étage 106 d'adaptation de tension et un étage 108 de filtrage.

L'étage 106 d'adaptation de tension comporte une première branche 110A, une deuxième branche 110B et une troisième branche 110C.

La première branche 110A est connectée entre la borne de sortie 28U et la borne de sortie 28W, et comporte un premier condensateur 112, une première résistance 114, un deuxième condensateur 116, et une deuxième résistance 118, connectés en série dans cet ordre. Le condensateur 112 et la résistance 114 sont reliés entre eux par un point milieu 120. La résistance 114 et le condensateur 116 sont reliés entre eux par un point milieu 121. Le condensateur 116 et la résistance 118 sont reliés entre eux par un point milieu 122. Les condensateurs 112 et 116 présentent par exemple chacun une valeur égale à 330 nF. Les résistances 114 et 118 présentent par exemple chacune une valeur égale à 600 kΩ.

La deuxième branche 110B est connectée entre la borne de sortie 28V et le point milieu 121.

La troisième branche 110C est connectée en parallèle de la première branche 110A, entre la borne de sortie 28U et la borne de sortie 28W, et comporte une résistance 124 et un condensateur 126, connectés en série et reliés entre eux par un point milieu 128. La résistance 124 présente, par exemple, une valeur égale à 600 kΩ. Le condensateur 126 présente, par exemple, une valeur égale à 330 nF.

L'étage 108 de filtrage comporte six branches 130 et un dispositif d'isolement 132 des tensions mesurées en sortie de l'onduleur 18, l'entrée du dispositif 132 étant connectée aux branches 130.

L'étage 108 de filtrage comporte également trois soustracteurs 134U, 134V, 134W, chaque soustracteur étant connecté à la sortie du dispositif d'isolement 132, et trois filtres passe-bas 72, chaque filtre passe-bas étant connecté en sortie d'un soustracteur 134U, 134V, 134W.

Une première branche 130A est connectée entre la borne de sortie 28U et le point milieu 120. La première branche 130A comporte un condensateur 136 et une résistance 138 connectés en série et reliés entre eux par un point milieu 140. Le condensateur 136 présente, par exemple, une valeur égale à 330 nF. La résistance 138 présente, par exemple, une valeur égale à 600 kΩ.

Une deuxième branche 130B est connectée en parallèle de la première branche 130A, entre la borne de sortie 28U et le point milieu 120, et comporte deux diodes Zener 70, connectées tête-bêche et en série.

Une troisième branche 130C est connectée entre la borne de sortie 28V et le point milieu 122. La troisième branche 130C comporte un condensateur 136 et une résistance 138 connectés en série et reliés entre eux par un point milieu 142.

Une quatrième branche 130D est connectée en parallèle de la troisième branche 130C, entre le point milieu 121 et le point milieu 122, et comporte deux diodes Zener 70, connectées tête-bêche et en série.

Une cinquième branche 130E est connectée entre le point milieu 128 et la borne de sortie 28W. La cinquième branche 130E comporte un condensateur 136 et une résistance 138 connectés en série et reliés entre eux par un point milieu 144.

Une sixième branche 130F est connectée en parallèle de la cinquième branche 130E, entre le point milieu 128 et la borne de sortie 28W, et comporte deux diodes Zener 70, connectées tête-bêche et en série.

Le dispositif d'isolement 132 comporte six bornes d'entrée 146, trois organes d'isolement 148 et trois bornes de sortie 150.

Une première borne d'entrée 146A est connectée à la borne d'entrée 28U. Une deuxième borne d'entrée 146B est connectée au point milieu 140. Une troisième borne d'entrée 146C est connectée au point milieu 121. Une quatrième borne d'entrée 146D est connectée au point milieu 142. Une cinquième borne d'entrée 146E est connectée au point milieu 144. Une sixième borne d'entrée 146F est connectée à la borne d'entrée 28W.

Chaque organe d'isolement 148 comporte un convertisseur analogique-numérique 152 et un transmetteur optique 154 connectés en série. Chaque organe d'isolement 148 comporte également un récepteur optique 156 et un convertisseur numérique-analogique 158 connectés en série.

Chaque convertisseur analogique-numérique 152 comporte deux bornes d'entrée et une borne de sortie, les deux bornes d'entrée formant deux bornes d'entrée 146 du dispositif d'isolement 132.

Chaque transmetteur optique 154 est propre à envoyer un signal optique au récepteur optique 156 correspondant.

Chaque convertisseur numérique-analogique 158 comporte une borne d'entrée et une borne de sortie, la borne de sortie formant une borne de sortie 150 du dispositif d'isolement 132.

Un premier organe d'isolement 148A est connecté entre, d'une part, les bornes d'entrée 146A, 146B et, d'autre part, une borne de sortie 150A.

Un deuxième organe d'isolement 148B est connecté entre, d'une part, les bornes d'entrée 146C, 146D et, d'autre part, une borne de sortie 150B.

Un troisième organe d'isolement 148C est connecté entre, d'une part, les bornes d'entrée 146E, 146F et, d'autre part, une borne de sortie 150C.

Le soustracteur 134U est connecté par sa borne d'entrée positive à la borne de sortie 150C et par sa borne d'entrée négative à la borne de sortie 150A.

Le soustracteur 134V est connecté par sa borne d'entrée positive à la borne de sortie 150A et par sa borne d'entrée négative à la borne de sortie 150B.

Le soustracteur 134W est connecté par sa borne d'entrée positive à la borne de sortie 150B et par sa borne d'entrée négative à la borne de sortie 150C.

L'organe de calcul 104 est connecté en sortie des trois filtres passe-bas 72 et comporte trois bornes de sortie 160U, 160V, 160W. L'organe de calcul 104 comporte également trois étages de régulation, chaque étage étant formé d'un correcteur proportionnel-intégral 54.

L'organe de calcul 104 est propre à fournir sur la sortie 160U, 160V, respectivement 160W le signal correctif Vuc, Vvc, respectivement Vwc et à l'envoyer au soustracteur 47U, 47V, respectivement 47W.

En variante, le système de conversion 100 ne comporte pas de transformateur de tension 24.

En variante, le système de conversion 100 comporte une pluralité N d'onduleurs 18 connectés entre eux au travers d'inductances de couplage, N étant un entier supérieur ou égal à deux. Le dispositif de correction 98 comporte, pour chaque onduleur 18, un organe de correction propre à injecter un signal correctif en entrée des moyens de commande 20 dudit onduleur 18. Le dispositif de correction 98 comporte donc N organes de correction.

Le fonctionnement du système de conversion 100 va désormais être expliqué.

L'organe de correction 98 extrait les composantes continues et/ou basse fréquence de la tension mesurée sur les bornes de sortie 28U, 28V, 28W.

Cette mesure des composantes continues et/ou basse fréquence de la tension est effectuée en particulier via la réduction, par l'étage d'adaptation de tension 106, de la valeur de l'amplitude des tensions alternatives entre phases, puis par le filtrage, par l'étage de filtrage 108, des composantes de fréquence inférieure à 1 Hz des tensions, pour chaque tension simple monophasée.

Pour réaliser ce filtrage, l'étage 108 de filtrage transmet dans un premier temps, via le dispositif d'isolement 132, des mesures isolées des composantes des tensions entre phases de fréquence inférieure à 1 Hz. Plus précisément, cet isolement des mesures est réalisé par chaque association entre un transmetteur optique 154 et un récepteur optique 156, et permet de ne pas perturber les mesures par des signaux de référence assimilables lors de cette étape à des bruits de mesure.

Dans un second temps, l'étage 108 de filtrage effectue la transformation, via les soustracteurs 134U, 134V, 134W, des composantes des tensions entre phases en composantes de tensions simples monophasées, de fréquence inférieure à 10Hz.

L'organe de correction 98 fournit alors, via l'organe de calcul 104, un signal correctif Vuc, Vvc, respectivement Vwc sur sa borne de sortie 160U, 160V, respectivement 160W.

Par comparaison avec le système de conversion 10 selon le premier mode de réalisation, le système de conversion 100 selon ce mode de réalisation permet d'obtenir une meilleure résolution sur la compensation de la composante continue ou basse fréquence du courant alternatif de sortie.

Le système de conversion 100 selon ce mode de réalisation permet également, lorsqu'il est utilisé avec plusieurs onduleurs, d'éviter la saturation des inductances de couplage et d'équilibrer les courants circulant entre les onduleurs.

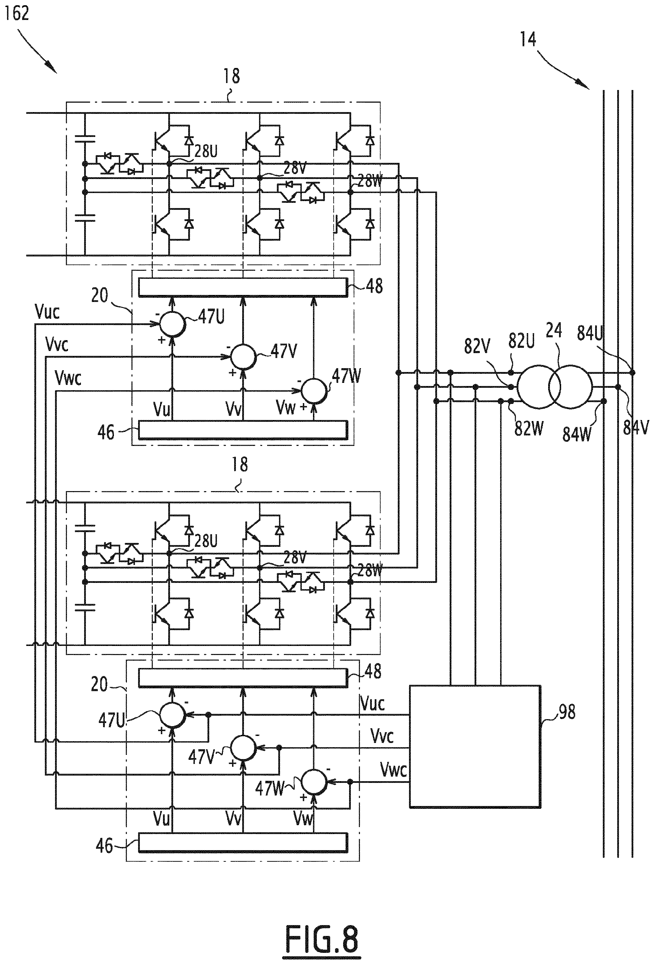

La figure 8 illustre un quatrième mode de réalisation, pour lequel les éléments analogues au troisième mode de réalisation décrit précédemment sont repérés par des références identiques.

Selon ce quatrième mode de réalisation, le système de conversion 162 comporte deux onduleurs 18 et un dispositif de correction.

Les deux onduleurs 18 sont connectés entre eux au travers de deux inductances de couplage.

Le dispositif de correction ne comporte qu'un seul organe de correction 98 connecté entre les trois bornes d'entrée 82U, 82V, 82W du transformateur de tension 24.

L'organe de correction 98 est propre à injecter trois signaux correctifs Vuc, Vvc, Vwc en entrée des moyens de commande 20 de chaque onduleur 18.

En variante, le système de conversion 162 comporte une pluralité N d'onduleurs 18 connectés entre eux au travers d'inductances de couplage, N étant un entier supérieur à deux.

En variante, le dispositif de correction comporte un seul organe de correction 164 connecté entre les trois bornes d'entrée 82U, 82V, 82W du transformateur de tension 24. A la différence de l'organe de correction 98 du système de conversion 100, l'organe de correction 164 ne comporte pas de condensateurs 136 ni de résistances 138. Chacune des trois paires de diodes Zener 70, connectées tête-bêche et en série, est connectée entre d'une part la borne de sortie 28U, 28V, respectivement 28W, et d'autre part le point milieu 120, 122, respectivement 128.

Le fonctionnement de ce quatrième mode de réalisation est analogue à celui du troisième de réalisation décrit précédemment, et n'est donc pas décrit à nouveau.

Les avantages de ce quatrième mode de réalisation du système de conversion 162 sont obtenus par la combinaison entre les avantages du deuxième mode de réalisation et les avantages du troisième mode de réalisation, et ne sont donc pas décrits à nouveau.

On conçoit ainsi que le système de conversion selon l'invention permet de réduire la composante continue ou basse fréquence de la ou des phases du courant alternatif de sortie, lorsque des charges perturbatrices sont reliées au réseau alternatif.

**Revendications**

1. Système de conversion (10) d'un courant continu d'entrée en un courant alternatif de sortie comportant M phase(s), M étant un nombre entier supérieur ou égal à un, comprenant :

    - au moins un onduleur de tension (18) propre à convertir un courant continu d'entrée en un courant alternatif de sortie, le ou chaque onduleur (18) comprenant deux bornes d'entrée (26A, 26B), deux sources de tension continue (32) connectées en série entre ses deux bornes d'entrée (26A, 26B), M borne(s) de sortie (28U, 28V, 28W) et M branche(s) de commutation (30), les deux sources de tension continue (32) étant reliées entre elles par un point milieu (33), chaque borne de sortie correspondant à une phase,
    - des moyens (20) de commande du ou de chaque onduleur (18),
    - au moins un dispositif (22) de correction de la tension de sortie délivrée par le ou chaque onduleur (18), propre à injecter un signal correctif (Vuc, Vvc, Vwc) en entrée des moyens de commande (20), le ou chaque dispositif de correction (22) comportant un organe (52) de mesure d'une composante de la tension délivrée par le ou chaque onduleur (18) pour les fréquences inférieures à 10 Hz, de préférence inférieures ou égales à 1 Hz, et un organe (54) de calcul du signal correctif (Vuc, Vvc, Vwc) en fonction de la composante de tension mesurée,

    **caractérisé en ce que** le ou chaque dispositif de correction (22) est connecté entre au moins une borne de sortie (28U, 28V, 28W) du ou d'un des onduleur(s) (18) et le point milieu (33) dudit onduleur (18).

2. Système de conversion (10) selon la revendication 1, **caractérisé en ce que** le système de conversion comporte un transformateur de tension (24) à M phase(s), comprenant M borne(s) d'entrée (82U, 82V, 82W) et M borne(s) de sortie (84U, 84V, 84W), chaque borne d'entrée correspondant à une phase et étant reliée à une sortie (28U, 28V, 28W) du ou de chaque onduleur (18) correspondant à ladite phase.

3. Système de conversion (10) selon la revendication 1 ou 2, **caractérisé en ce que** l'organe de mesure (52) comporte un étage d'adaptation de tension (56) propre à réduire la valeur de la tension de sortie délivrée, un étage de filtrage (58) propre à extraire une composante de tension de fréquence inférieure à 10 Hz, de préférence inférieure ou égale à 1 Hz, et un étage (54) de régulation de la tension, les étages d'adaptation de tension, de filtrage et de régulation étant connectés entre eux.

4. Système de conversion (10) selon la revendication 3, **caractérisé en ce que** les étages d'adaptation de tension (56), de filtrage (58) et de régulation (54) sont connectés en série et dans cet ordre.

5. Système de conversion (10) selon la revendication 3 ou 4, **caractérisé en ce que** l'étage de filtrage (58) comporte un filtre de type passe-bas (72) présentant une fréquence de coupure de valeur inférieure à la fréquence principale du courant alternatif délivré en sortie du ou de chaque onduleur (18).

6. Système de conversion (10) selon l'une des revendications 3 à 5, **caractérisé en ce que** l'étage de régulation (54) comporte un élément propre à assurer une correction de type intégrale.

7. Procédé de commande d'un système de conversion (10) d'un courant continu d'entrée en un courant alternatif de sortie comportant M phase(s), M étant un nombre entier supérieur ou égal à un, le système de conversion (10) comprenant au moins un onduleur de tension (18) propre à convertir un courant continu d'entrée en un courant alternatif de sortie, le ou chaque onduleur (18) comprenant deux bornes d'entrée (26A, 26B), deux sources de tension continue (32) connectées en série entre ses deux bornes d'entrée (26A, 26B), M borne(s) de sortie (28U, 28V, 28W) et M branche(s) de commutation (30), les deux sources de tension continue (32) étant reliées entre elles par un point milieu (33), chaque borne de sortie correspondant à une phase, des moyens (20) de commande du ou de chaque onduleur (18), au moins un dispositif (22) de correction de la tension de sortie délivrée par le ou chaque onduleur (18), le ou chaque dispositif de correction (22) étant connecté entre au moins une borne de sortie (28U, 28V, 28W) du ou d'un des onduleur(s) (18) et le point milieu (33) dudit onduleur (18),

le procédé comportant une étape de réinjection d'un signal correctif (Vuc, Vvc, Vwc) issu du ou de chaque dispositif de correction en entrée des moyens (20) de commande du ou de chaque onduleur (18), le procédé étant **caractérisé en ce qu'**il comporte, préalablement à l'étape de réinjection :

    - une étape de mesure, par le ou chaque dispositif de correction, d'une composante de la tension de sortie délivrée par le ou chaque onduleur pour les fréquences inférieures à 10 Hz, de préférence inférieures ou égales à 1 Hz, et
    - une étape de calcul, par le ou chaque dispositif de correction, du signal correctif en fonction de la composante de tension mesurée.

8. Procédé de commande selon la revendication 7, **caractérisé en ce que** l'étape de mesure de la composante de la tension comporte les sous-étapes suivantes :

    - la réduction de la valeur de l'amplitude de la tension alternative de sortie délivrée par le ou chaque onduleur, et
    - le filtrage d'une composante de tension de fréquence inférieure à 10 Hz, de préférence inférieure ou égale à 1 Hz.

**Patentansprüche**

1. System (10) zur Umwandlung eines Eingangsgleichstroms in einen Ausgangswechselstrom, der M Phase(n) aufweist, wobei M eine ganze Zahl größer als oder gleich eins ist, das aufweist:

    - wenigstens einen Spannungswechselrichter (18), der geeignet ist, um einen Eingangsgleichstrom in einen Ausgangswechselstrom zu wandeln, wobei der oder jeder Wechselrichter (18) zwei Eingangsanschlüsse (26A, 26B), zwei Gleichspannungsquellen (32), die in Reihe zwischen seinen beiden Eingangsanschlüssen (26A, 26B) angeschlossen sind, M Ausgangsanschluss/-anschlüsse (28A, 28V, 28W) und M Kommutierungszweig(e) (30) aufweist, wobei die beiden Gleichspannungsquellen (32) über einen Mittelabgriff (33) miteinander verbunden sind, wobei jeder Ausgangsanschluss einer Phase entspricht,
    - Mittel (20) zur Steuerung des oder jedes Wechselrichters (18),
    - wenigstens eine Vorrichtung (22) zur Korrektur der durch den oder jeden Wechselrichter (18) gelieferten Ausgangsspannung, die geeignet ist, um ein Korrektursignal (Vuc, Vvc, Vwc) am Eingang der Steuermittel (20) einzuspeisen, wobei die oder jede Korrekturvorrichtung (22) ein Organ (52) zur Messung einer Komponente der durch den oder jeden Wechselrichter (18) gelieferten Spannung für die Frequenzen, die kleiner als 10 Hz, vorzugsweise kleiner als oder gleich 1 Hz, sind, und ein Organ (54) zur Berechnung des Korrektursignals (Vuc, Vvc, Vwc) in Abhängigkeit von der gemessenen Spannungskomponente enthält,

**dadurch gekennzeichnet, dass** die oder jede Korrekturvorrichtung (22) zwischen wenigstens einem Ausgangsanschluss (28U, 28V, 28W) des oder eines der Wechselrichter(s) (18) und dem Mittelabgriff (33) des Wechselrichters (18) angeschlossen ist.

2. Umwandlungssystem (10) nach Anspruch 1, **dadurch gekennzeichnet, dass** das Umwandlungssystem einen Spannungstransformator (24) mit M Phase(n) aufweist, der M Eingangsanschluss/-anschlüsse (82U, 82V, 82W) und M Ausgangsanschluss/-anschlüsse (84U, 84V, 84W) enthält, wobei jeder Eingangsanschluss einer Phase entspricht und mit einem Ausgang (28U, 28V, 28W) des oder jedes Wechselrichters (18), der dieser Phase entspricht, verbunden ist.

3. Umwandlungssystem (10) nach Anspruch 1 oder 2, **dadurch gekennzeichnet, dass** das Messorgan (52) eine Spannungsanpassungsstufe (56), die geeignet ist, um den Wert der gelieferten Ausgangsspannung zu reduzieren, eine Filterungsstufe (58), die geeignet ist, um eine Spannungskomponente der Frequenz, die kleiner als 10 Hz, vorzugsweise kleiner als oder gleich 1 Hz, ist, zu extrahieren, und eine Stufe (54) zur Regelung der Spannung enthält, wobei die Spannungsanpassungs-, Filterungs- und Regelungsstufe miteinander verbunden sind.

4. Umwandlungssystem (10) nach Anspruch 3, **dadurch gekennzeichnet, dass** die Stufen zur Spannungsanpassung (56), Filterung (58) und Regelung (54) in Reihe und in diese Reihenfolge miteinander verbunden sind.

5. Umwandlungssystem (10) nach Anspruch 3 oder 4, **dadurch gekennzeichnet, dass** die Filterungsstufe (58) ein Filter der Bandpassbauart (72) aufweist, das eine Grenzfrequenz mit einem Wert aufweist, der kleiner ist als die Grundfrequenz des am Ausgang des oder jedes Wechselrichters (18) gelieferten Wechselstroms.

6. Umwandlungssystem (10) nach einem der Ansprüche 3 bis 5, **dadurch gekennzeichnet, dass** die Regelungsstufe (54) ein Element enthält, das geeignet ist, um eine Korrektur nach Art eines Intergrals sicherzustellen.

7. Verfahren zur Steuerung eines Systems zur Umwandlung (10) eines Eingangsgleichstroms in einen Ausgangswechselstrom, der M Phase(n) enthält, wobei M eine ganze Zahl größer als oder gleich eins ist, wobei das Umwandlungssystem (10) wenigstens einen Spannungswechselrichter (18), der geeignet ist, um einen Eingangsgleichstrom in einen Ausgangswechselstrom umzuwandeln, wobei der oder jeder Wechselrichter (18) zwei Eingangsanschlüsse (26A, 26B), zwei Gleichspannungsquellen (32), die in Reihe zwischen seinen beiden Eingangsanschlüssen (26A, 26B) angeschlossen sind, M Ausgangsanschluss/- anschlüsse (28U, 28V, 28W) und M Kommutierungszweig(e) 30 enthält, wobei die beiden Gleichspannungsquellen (32) über einen Mittelabgriff (33) miteinander verbunden sind, wobei jeder Ausgangsanschluss einer Phase entspricht, Mittel (20) zur Steuerung des oder jedes Wechselrichters (18), wenigstens eine Vorrichtung (22) zur Korrektur der durch den oder jeden Wechselrichter (18) gelieferten Ausgangsspannung enthält, wobei die oder jede Korrekturvorrichtung (22) zwischen wenigstens einem Ausgangsanschluss (28U, 28V, 28W) des oder eines der Wechselrichter(s) (18) und dem Mittelabgriff (33) des Wechselrichters (18) angeschlossen ist,

wobei das Verfahren einen Schritt zur Zurückführung eines Korrektursignals (Vuc, Vvc, Vwc), der von der oder jeder Korrekturvorrichtung ausgegeben wird, an den Eingang der Mittel (20) zur Steuerung des oder jedes Wechselrichter (18) enthält, wobei das Verfahren **dadurch gekennzeichnet ist, dass** es vor dem Rückführungsschritt enthält:

- einen Schritt zur Messung, über die oder jede Korrekturvorrichtung, einer Komponente der durch den oder jeden Wechselrichter gelieferten Ausgangsspannung für die Frequenzen, die kleiner als 10 Hz, vorzugsweise kleiner als oder gleich 1 Hz, sind, und
- einen Schritt zur Berechnung, über die oder jede Korrekturvorrichtung, eines Korrektursignals in Abhängigkeit von der gemessenen Spannungskomponente.

8. Steuerungsverfahren nach Anspruch 7, **dadurch gekennzeichnet, dass** der Schritt zur Messung der Komponente der Spannung die folgenden Unterschritte enthält:

- Reduktion des Wertes der Amplitude der durch den oder jeden Wechselrichter gelieferten Ausgangswechselspannung und
- Filterung einer Spannungskomponente der Frequenz, die kleiner als 10 Hz, vorzugsweise kleiner als oder gleich 1 Hz, ist.

**Claims**

1. System (100) for converting a direct input current into an alternating output current comprising M phase(s), M being an integer greater than or equal to one, comprising:

   - at least one voltage converter (18) able to convert a direct input current into an alternating output current, the or each converter (18) comprising two input terminals (26A, 26B), two sources (32) of direct current voltage connected in series between its two input terminals (26A, 26B), M output terminal(s) (28U, 28V, 28W) and M switching arm(s) (30), the two sources (32) of direct current voltage being connected together via a middle point (33), each output terminal corresponding to a phase,
   - control means (20) for the or each converter (18),
   - at least one correction device (22) for the output voltage supplied by the or each converter (18), able to inject a correction signal (Vuc, Vvc, Vwc) at the input to the control means (20), the or each correction device (22) comprising an element (52) for measuring a component of the voltage supplied by the or each converter (18) for frequencies less than 10 Hz, preferably less and or equal to 1 Hz, and an element (54) for calculating the correction signal (Vuc, Vvc, Vwc) as a function of the voltage component measured,

   **characterised in that** the or each correction device (22) is connected between at least one output terminal (28U, 28V, 28W) of the or one of the converter(s) (18) and the middle point (33) of said converter (18).

2. Conversion system (10) according to claim 1, **characterised in that** the conversion system comprises a voltage transformer (24) with M phase(s) comprising M input terminal(s) (82U, 82V, 82W) and M output terminal(s) (84U, 84V, 84W), each input terminal corresponding to a phase and being connected to an output (28U, 28V, 28W) of the or each converter (18) corresponding to said phase.

3. Conversion system (10) according to claim 1 or 2, **characterised in that** the measuring element (52) comprises a voltage adaptation stage (56) able to reduce the value of the output voltage supplied, a filtering stage (58) able to extract a voltage component of frequency less than 10 Hz, preferably less than or equal to 1 Hz, and a voltage regulation stage (54), the stages of voltage adaptation, filtering and regulation being connected together.

4. Conversion system (10) according to claim 3, **characterised in that** the stages of voltage adaptation (56), filtering (58) and regulation (54) are connected in series and in this order.

5. Conversion system (10) according to claim 3 or 4, **characterised in that** the filtering stage (58) comprises a low-pass type filter (72) with a cut-off frequency of value lower than the principal frequency of the alternating current supplied at the output from the or each converter (18).

6. Conversion system (10) according to any of claims 3 to 5, **characterised in that** the regulation stage (54) comprises an element able to ensure an integral type correction.

7. Method for controlling a system (10) for converting a direct input current into an alternating output current comprising M phase(s), M being an integer greater than or equal to one, the conversion system (10) comprising at least one voltage converter (18) able to convert a direct input current into an alternating output current, the or each converter (18) comprising two input terminals (26A, 26B), two sources (32) of direct current voltage connected in series between its two input terminals (26A, 26B), M output terminal(s) (28U, 28V, 28W) and M switching arm(s) (30), the two sources (32) of direct current voltage being connected together via a middle point (33), each output terminal corresponding to a phase, control means (20) for the or each converter (18), at least one correction device (22) for the output voltage supplied by the or each converter (18), the or each correction device (22) being connected between at least one output terminal (28U, 28V, 28W) of the or one of the converter(s) (18) and the middle point (33) of said converter (18),
   the method comprising a step of reinjection of a correction signal (Vuc, Vvc, Vwc) emitted by the or each correction device at the input of the control means (20) of the or each converter (18), the method being **characterised in that** it comprises, prior to the reinjection step:

   - a step of measuring, by the or each correction device, a component of the output voltage supplied by the or each converter for frequencies less than 10 Hz, preferably less and or equal to 1 Hz, and
   - a step of calculating, by the or each correction device, the correction signal as a function of the measured voltage component.

8. Control method according to claim 7, **characterised in that** the step of measuring the voltage component comprises the following sub-steps:

- reduction of the amplitude value of the alternating output voltage supplied by the or each converter, and
- filtering of a voltage component of frequency less than 10 Hz, preferably less and or equal to 1 Hz.

## FIG.1

FIG.2

EP 2 579 442 B1

FIG.3

EP 2 579 442 B1

16

## FIG.4

FIG.5

EP 2 579 442 B1

FIG.6

EP 2 579 442 B1

FIG.7

EP 2 579 442 B1

FIG.8

**EP 2 579 442 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5177428 A
- FR 0859062